# EUROPEAN PATENT SPECIFICATION

(11) **EP 2 571 203 B1**
(45) Date of publication and mention of the grant of the patent: **30.03.2016**
(21) Application number: 11797548.2
(22) Date of filing: 20.05.2011
(51) Int. Cl.: H04L 12/709, H04L 12/723

(54) **TUNNEL SWITCHING METHOD AND SYSTEM FOR MULTI-PROTOCOL LABEL SWITCHING SERVICES**
TUNNELSCHALTVERFAHREN UND SYSTEM FÜR MEHRPROTOKOLL-LABEL-SWITCHING-DIENSTE
PROCÉDÉ ET SYSTÈME DE COMMUTATION DE TUNNEL POUR SERVICES DE COMMUTATION MULTIPROTOCOLE PAR ÉTIQUETTE

(30) Priority: 25.06.2010 CN 201010219278
(43) Date of publication of application: 20.03.2013
(73) Proprietor: ZTE Corporation, Shenzhen, Guangdong 518057 (CN)
(72) Inventor: PAN, Tingshan, Shenzhen Guangdong 518057 (CN)
(74) Representative: Tischner, Oliver
(86) International application number: PCT/CN2011/074402
(87) International publication number: WO 2011/160517

(56) References cited:
- WO-A1-2009/155996
- CN-A- 1 725 761
- CN-A- 101 582 834
- CN-A- 101 710 877
- CN-A- 101 877 677
- US-A1- 2009 073 989

## Description

### TECHNICAL FIELD

The disclosure relates to the field of tunnel protection for Multi-Protocol Label Switch (MPLS) services, and in particular to a tunnel switching method and system for MPLS services.

### BACKGROUND

The MPLS is a standard of the new-generation IP high-speed backbone network switch, and is put forward by the Internet Engineering Task Force (IETF). The MPLS technology separates the routing layer from the forwarding layer completely, has such advantages as fast forwarding, Quality of Service (QoS) assurance, multi-service support, and plays a more and more important role in the next-generation telecommunication network.

The key of the MPLS technology is the introduction of the concept of label, wherein the label is a kind of short content information which does not include topology information and only has local significance. In an MPLS network, when IP packets enter the first MPLS device, an MPLS edge router encapsulates the IP packets with labels; before the encapsulation, the MPLS edge router analyzes content of the IP packets and selects appropriate labels for these IP packets; then, all nodes in the MPLS network make a forward judgment according to the label information; when the IP packets finally leave the MPLS network, the labels are peeled by the MPLS edge router.

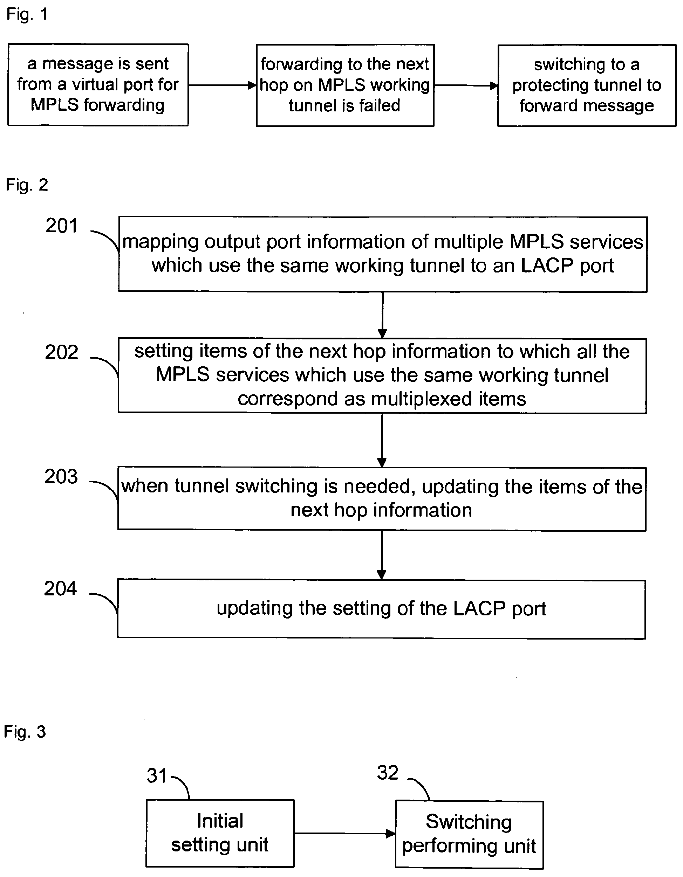

Based on the requirement for forwarding reliability of MPLS service messages, the MPLS services need to first establish a protecting tunnel, so as to realize a protection function for the MPLS services. Specifically, when a working tunnel goes wrong, the head node of the working tunnel can fast switch to the protecting tunnel to continue forwarding of MPLS service messages; the protocol requires the time of switch protection to be controlled in 50ms. Fig. 1 shows a flowchart of tunnel switching in a related art; as shown in Fig. 1, the existing tunnel switching technology needs to switch each service on the working tunnel in order. For example, if there are 500 MPLS services, switching is needed to be executed for 500 times, it is needed to try to send the services to the next hop node on the working tunnel during each switching, and only after the try is failed, switching is performed and the services are sent to the next hop node on the protecting tunnel; therefore, hardware resources for 1000 next hop processing will be consumed, and the requirement for switch time specified in the protocol is difficult to meet.

US 2009/073989 discusses a redundancy at a virtual provider edge node that faces a tunnelling protocol core network for virtual private local area network (LAN) service (VPLS).

CN 101 877 677 discusses a method and system for switching tunnels for Multi-protocol label switch (MPLS) service.

CN 1 725 761 discusses a method for network equipment to implement link aggregation.

CN 101 582 834 discusses a method, device and system for updating a forwarding table in Ethernet service transmission.

CN 101 710 877 discusses a pseudo wire-based method, device and system for processing traffic.

WO 2009/155996 discusses a method and system for link aggregation.

### SUMMARY

In view of the above, the disclosure mainly aims to provide a tunnel switching method and system for MPLS services, which can solve the problems that multiple MPLS services which use a working tunnel need long switching time and waste hardware resources of the next hop processing.

For achieving above aim, the following technical solutions are provided.

The disclosure provides a tunnel switching method for MPLS services, which includes:
mapping output port information of multiple MPLS services which use the same working tunnel to a Link Aggregation Control Protocol (LACP) port;
setting items of next hop information to which the MPLS services correspond as multiplexed items; and
when tunnel switching is needed, updating the items of the next hop information and setting of the LACP port.

The items of the next hop information may include: a three-layer interface index item and a destination Media Access Control (MAC) index item.

The multiple MPLS services which use the same working tunnel may include: all the MPLS services which use the same working tunnel on a tunnel head node.

The mapping to an LACP port may include: setting a member port of the LACP port as an output port of the working tunnel.

The updating the items of the next hop information and setting of the LACP port may include: updating the items of the next hop information and the setting of the LACP port corresponding to the working tunnel with items of the next hop information and setting of the LACP port corresponding to a protecting tunnel.

The disclosure further provides a tunnel switching system for MPLS services, which includes: an initial setting unit and a switching performing unit, wherein,
the initial setting unit is configured to map output port information of multiple MPLS services which use the same working tunnel to an LACP port, set items of next hop information to which the MPLS services correspond as multiplexed items, and send setting of the LACP port and the items of the next hop information to the switching performing unit; and
the switching performing unit is configured to, when tunnel switching is needed, update the items of the next hop information and the setting of the LACP port.

By mapping output port information of multiple MPLS services which use the same working tunnel to an LACP port, setting the items of the next hop information to which the MPLS services correspond as multiplexed items, and when tunnel switching is needed, updating the items of the next hop information and the setting of the LACP port, the tunnel switching method and system for MPLS services provided by the disclosure realize batch switching of the multiple MPLS services, improve the service switching time of the MPLS greatly, therefore the number of services has no influence on the switching time, and a lot of hardware resources are saved.

### BRIEF DESCRIPTION OF THE DRAWINGS

Fig. 1 shows a flowchart of tunnel switching in a related art;
Fig. 2 shows a flowchart of a tunnel switching method for MPLS services in the disclosure; and
Fig. 3 shows a structure diagram of a tunnel switching system for MPLS services in the disclosure.

### DETAILED DESCRIPTION

The basic concept of the disclosure is: mapping output port information of multiple MPLS services which use the same working tunnel to an LACP port, setting items of the next hop information to which the MPLS services correspond as multiplexed items, and when tunnel switching is needed, updating the items of the next hop information and the setting of the LACP port.

The technical solutions of the disclosure are described below with reference to the accompanying drawings and embodiments in detail.

Fig. 2 shows a flowchart of a tunnel switching method for MPLS services in the disclosure; as shown in Fig. 2, the tunnel switching method for MPLS services specifically includes the following steps:
Step 201: mapping output port information of multiple MPLS services which use the same working tunnel to the LACP port;
   specifically, the multiple MPLS services which use the same working tunnel include: all the MPLS services which use the same working tunnel on a tunnel head node. Wherein mapping to the LACP port further includes: setting the LACP port as an output port including the MPLS services. The output port of the MPLS services is usually directly set on the tunnel head node based on each piece of next hop information, which cannot realize the multiplexing function, therefore the output port information of the MPLS services is mapped to the LACP port, and then a member port of the LACP port is set as the output port of the MPLS services, which means that the MPLS services which use the same working tunnel are still forwarded from the output port connecting the working tunnel;
Step 202: setting the items of the next hop information to which all the MPLS services which use the same working tunnel correspond as multiplexed items;
   specifically, the items of the next hop information include: a three-layer interface index item and a destination MAC index item; setting the three-layer interface index item and the destination MAC index item to which the MPLS services correspond as multiplexed items specifically refers to that: since all the MPLS services use the same working tunnel, the three-layer interface information and the destination MAC information in the next hop information of the MPLS services are the same and can be managed uniformly by using multiplexed items;
Step 203: when tunnel switching is needed, updating the items of the next hop information;
   specifically, when the working tunnel goes wrong, a switching from the working tunnel to a protecting tunnel is needed. Therefore, information of the three-layer interface index item and information of the destination MAC index item are updated with information of the protecting tunnel. Since these items are preset as multiplexed items, the three-layer interface information and the destination MAC information in the next hop information of all the MPLS services which use the same working tunnel are updated by update for only one time.
   The three-layer interface information includes: source MAC information, VLAN information and tunnel label information. When updating is performed, an initial node does not change, therefore it is not needed to update the source MAC information reflecting the initial node, and it is only needed to update the VLAN information and the tunnel label information with VLAN information and tunnel label information of the protecting tunnel;
and Step 204: updating the setting of the LACP port;
   specifically, updating the setting of the LACP port is: updating the member port of the LACP port from the output port connecting the working tunnel to an output port connecting the protecting tunnel.

Furthermore, fast batch switching from the working tunnel to the protecting tunnel for multiple MPLS services is implemented after updating, and the MPLS services can be forwarded continuously according to the updated LACP port and the items of the next hop information.

The method shown in Fig. 2 is further described below through an embodiment in detail.

Supposing there is a tunnel head node A, and its MAC is 0x00d0d0000001; access of data at a user side is performed at its port 1, the access type is port + VLAN, there are 1000 services VLAN which can be configured, namely VLAN1 to VLAN 1000, at the same time, pseudo wire labels to which the VLAN1 to VLAN1000 correspond are respectively 16 to 1015; port 2 is the output port connecting the working tunnel, and the tunnel label of the working tunnel is 200; and port 3 is the output port connecting the protecting tunnel, and the tunnel label of the protecting tunnel is 300.

When normally forwarding is performed, all services are forwarded on the working tunnel. Message of VLAN1 entering from the port 1 will be encapsulated as: the pseudo wire label is 16, the tunnel label is 200, the three-layer interface VLAN is 200, the destination MAC is 0x00d0d0000002, and the message of VLAN1 is sent from the port 2; and other services which use the physical port 2 are encapsulated similarly.

First of all, a mapping relationship between port information of all the services which use the same working tunnel and the LACP port is set on a switch chip of the tunnel head node A, namely: setting an enabling LACP1 inside a switch, and the LACP1 includes the port 2; and setting the three-layer interface index item and the destination MAC index item of all the MPLS services on the working tunnel as multiplexed items on the switch chip of the tunnel head node A, for example, the message of VLAN1 entering from the port 1 is encapsulated as: the pseudo wire label is 16, the tunnel label is 200, the three-layer interface VLAN is 200, the destination MAC is 0x00d0d0000002, the source MAC is 0x00d0d0000001, and the message of VLAN1 is sent from the LACP1. Other services on the working tunnel are configured similarly.

When the working tunnel goes wrong and it is needed to switch to the protecting tunnel, the three-layer interface index item to which the next hop of all the services on the working tunnel points is updated, the VLAN is modified to 300, and the tunnel label is modified to 300; and the destination MAC index item to which the next hop of all the services on the working tunnel points is updated, the destination MAC is modified from 0x00d0d0000002 to 0x00d0d0000003. The setting of the LACP1 is updated: the port 3 is added after the port 2 is deleted.

Fig. 3 shows a structure diagram of a tunnel switching system for MPLS services in the disclosure; as shown in Fig. 3, the tunnel switching system for MPLS services includes: an initial setting unit 31 and a switching performing unit 32, wherein,
the initial setting unit 31 is configured to map output port information of multiple MPLS services which use the same working tunnel to an LACP port, set items of the next hop information to which the MPLS services correspond as multiplexed items, and send setting of the LACP port and the items of the next hop information to the switching performing unit 32;
specifically, the multiple MPLS services which use the same working tunnel include: all the MPLS services which use the same working tunnel on a tunnel head node. Wherein mapping to the LACP port further includes: setting the LACP port as an output port including the MPLS services. The output port of the MPLS services is usually directly set on the tunnel head node based on each piece of next hop information, which thus cannot realize the multiplexing function, therefore the output port information of MPLS services is mapped to the LACP port, and then a member port of the LACP port is set as the output port of the MPLS services, which means that the MPLS services which use the same working tunnel are still forwarded from the output port connecting the working tunnel.

The items of the next hop information include: a three-layer interface index item and a destination MAC index item. Setting the three-layer interface index item and the destination MAC index item to which the MPLS services correspond as multiplexed items specifically refers to that: since all the MPLS services use the same working tunnel, the three-layer interface information and the destination MAC information in the next hop information of MPLS services are the same and can be managed uniformly by using multiplexed items.

The switching performing unit 32 is configured to, when tunnel switching is needed, update the items of the next hop information and the setting of the LACP port.

Specifically, when the working tunnel goes wrong, a switching from the working tunnel to the protecting tunnel is needed. Therefore, information of the three-layer interface index item and information of the destination MAC index item are updated with information of the protecting tunnel. Since these items are preset as multiplexed items, the three-layer interface information and the destination MAC information in the next hop information of all the MPLS services which use the same working tunnel are updated by update for only one time. The three-layer interface information includes: source MAC information, VLAN information and tunnel label information. When updating is performed, an initial node does not change, therefore it is not needed to update the source MAC information reflecting the initial node, and it is only needed to update the VLAN information and the tunnel label information with VLAN information and tunnel label information of the protecting tunnel. Updating the setting of the LACP port is specifically: updating the output port connecting the working tunnel with an output port connecting the protecting tunnel.

The above is only the preferred embodiment of the disclosure and not intended to limit the disclosure; any modifications, equivalent replacements, improvements and the like within the and principle of the disclosure shall fall within the scope of the claims of the disclosure.

## Claims

1. A tunnel switching method for Multi-Protocol Label Switch, MPLS, services, **characterized in that** the method comprises:
mapping (201) output port information of multiple MPLS services which use a same working tunnel to a Link Aggregation Control Protocol, LACP, port;
setting (202) items of next hop information to which the MPLS services correspond as multiplexed items; and
when (203, 204) tunnel switching is needed, updating the items of the next hop information and setting of the LACP port.

2. The method according to claim 1, wherein the items of the next hop information comprise: a three-layer interface index item and a destination Media Access Control, MAC, index item.

3. The method according to claim 1 or 2, wherein the multiple MPLS services which use a same working tunnel comprise: all the MPLS services which use the same working tunnel on a tunnel head node.

4. The method according to claim 1 or 2, wherein the mapping to an LACP port comprises: setting a member port of the LACP port as an output port of the working tunnel.

5. The method according to claim 1 or 2, wherein the updating the items of the next hop information and setting of the LACP port comprises: updating the items of the next hop information and the setting of the LACP port corresponding to the working tunnel with items of the next hop information and setting of the LACP port corresponding to a protecting tunnel.

6. A tunnel switching system for Multi-Protocol Label Switch, MPLS, services, **characterized in that** the system comprises: an initial setting unit (31) and a switching performing unit(32), wherein,
the initial setting unit is configured to map output port information of multiple MPLS services which use a same working tunnel to a Link Aggregation Control Protocol, LACP, port, set items of next hop information to which the MPLS services correspond as multiplexed items, and send setting of the LACP port and the items of the next hop information to the switching performing unit; and
the switching performing unit is configured to, when tunnel switching is needed, update the items of the next hop information and the setting of the LACP port.

7. The system according to claim 6, wherein the items of the next hop information comprise: a three-layer interface index item and a destination Media Access Control, MAC, index item.

8. The system according to claim 6 or 7, wherein the multiple MPLS services which use a same working tunnel involved in the initial setting unit comprise: all the MPLS services which use the same working tunnel on a tunnel head node.

9. The system according to claim 6 or 7, wherein the initial setting unit mapping the output port information of the MPLS services to the LACP port comprises: setting a member port of the LACP port as an output port of the working tunnel.

10. The system according to claim 6 or 7, wherein the switching performing unit updating the items of the next hop information and the setting of the LACP port comprises: updating the items of the next hop information and the setting of the LACP port corresponding to the working tunnel with items of the next hop information and setting of the LACP port corresponding to a protecting tunnel.

## Patentansprüche

1. Tunnel-Switching-Verfahren für Multi-Protocol-Label-Switch-(MPLS-)Dienste, **dadurch gekennzeichnet, dass** das Verfahren umfasst:
Zuordnen (201) von Ausgabeanschlussinformationen mehrerer MPLS-Dienste, die einen gleichen Arbeitstunnel verwenden, zu einem Link-Aggregation-Control-Protocol-(LACP-)Anschluss;
Einstellen (202) von Teilen von Next-Hop-Informationen, denen die MPLS-Dienste entsprechen, als gemultiplexte Teile; und
wenn (203, 204) ein Tunnel-Switching erforderlich ist, Aktualisieren der Teile der Next-Hop-Informationen und der Einstellung des LACP-Anschlusses.

2. Verfahren nach Anspruch 1, wobei die Teile der Next-Hop-Informationen umfassen: einen 3-Layer-Schnittstellen-Indexteil und einen Ziel-Media-Access-Control-(MAC-)Indexteil.

3. Verfahren nach Anspruch 1 oder 2, wobei die mehreren MPLS-Dienste, die einen gleichen Arbeitstunnel verwenden, umfassen: alle MPLS-Dienste, die den gleichen Arbeitstunnel verwenden, auf einem Tunnelhauptknoten.

4. Verfahren nach Anspruch 1 oder 2, wobei das Zuordnen zu einem LACP-Anschluss umfasst: Einstellen eines Elementanschlusses des LACP-Anschlusses als Ausgabeanschluss des Arbeitstunnels.

5. Verfahren nach Anspruch 1 oder 2, wobei das Aktualisieren der Teile der Next-Hop-Informationen und das Einstellen des LACP-Anschlusses umfasst: Aktualisieren der Teile der Next-Hop-Informationen und der Einstellung des LACP-Anschlusses, der dem Arbeitstunnel entspricht, mit Teilen der Next-Hop-Informationen und Einstellen des LACP-Anschlusses, der einem Schutztunnel entspricht.

6. Tunnel-Switching-System für Multi-Protocol-Label-Switch-(MPLS-)Dienste, **dadurch gekennzeichnet, dass** das System umfasst: eine Ausgangseinstellungseinheit (31) und eine Switching-Durchführungseinheit (32), wobei
die Ausgangseinstellungseinheit so konfiguriert ist, dass sie die Ausgabeanschlussinformationen mehrerer MPLS-Dienste, die einen gleichen Arbeitstunnel verwenden, zu einem Link-Aggregation-Control-Protocol-(LACP-)Anschluss zuordnet, Teile der Next-Hop-Informationen, denen die MPLS-Dienste entsprechen, als gemultiplexte Teile einstellt und die Einstellung des LACP-Anschlusses und die Teile der Next-Hop-Informationen an die Switching-Durchführungseinheit sendet; und
die Switching-Durchführungseinheit so konfiguriert ist, dass sie, wenn ein Tunnel-Switching erforderlich ist, die Teile der Next-Hop-Informationen und die Einstellung des LACP-Anschlusses aktualisiert.

7. System nach Anspruch 6, wobei die Teile der Next-Hop-Informationen umfassen: einen 3-Layer-Schnittstellen-Indexteil und einen Ziel-Media-Access-Control-(MAC-)Indexteil.

8. System nach Anspruch 6 oder 7, wobei die mehreren MPLS-Dienste, die einen gleichen Arbeitstunnel verwenden, die an der Ausgangseinstellungseinheit beteiligt sind, umfassen: alle MPLS-Dienste, die den gleichen Arbeitstunnel verwenden, auf einem Tunnelhauptknoten.

9. System nach Anspruch 6 oder 7, wobei das Zuordnen der Ausgabeanschlussinformationen der MPLS-Dienste zum LACP-Anschluss durch die Ausgangseinstellungseinheit umfasst: Einstellen eines Elementanschlusses des LACP-Anschlusses als Ausgabeanschluss des Arbeitstunnels.

10. System nach Anspruch 6 oder 7, wobei das Aktualisieren der Teile der Next-Hop-Informationen und der Einstellung des LACP-Anschlusses durch die Switching-Durchführungseinheit umfasst: Aktualisieren der Teile der Next-Hop-Informationen und der Einstellung des LACP-Anschlusses, der dem Arbeitstunnel entspricht, mit Teilen der Next-Hop-Informationen und Einstellen des LACP-Anschlusses, der einem Schutztunnel entspricht.

## Revendications

1. Procédé de commutation de tunnel pour des services de commutation multiprotocole par étiquette, MPLS, **caractérisé en ce que** le procédé comprend les étapes ci-dessous consistant à :
mettre en correspondance (201) des informations de port de sortie de multiples services de commutation MPLS qui utilisent un même tunnel de fonctionnement avec un port de protocole de commande d'agrégation de liaisons, LACP ;
définir (202) des éléments d'informations de saut suivant auxquels les services de commutation MPLS correspondent en tant que des éléments multiplexés ; et
lorsqu'une (203, 204) commutation de tunnel est nécessaire, mettre à jour les éléments des informations de saut suivant et la définition du port de protocole LACP.

2. Procédé selon la revendication 1, dans lequel les éléments des informations de saut suivant comprennent : un élément d'index d'interface à trois couches et un élément d'index de commande d'accès au support, MAC, de destination.

3. Procédé selon la revendication 1 ou 2, dans lequel les multiples services de commutation MPLS qui utilisent un même tunnel de fonctionnement comprennent : tous les services de commutation MPLS qui utilisent le même tunnel de fonctionnement sur un noeud de tête de tunnel.

4. Procédé selon la revendication 1 ou 2, dans lequel la mise en correspondance avec un port de protocole LACP comprend l'étape consistant à : définir un port membre du port de protocole LACP en tant qu'un port de sortie du tunnel de fonctionnement.

5. Procédé selon la revendication 1 ou 2, dans lequel la mise à jour des éléments des informations de saut suivant et de la définition du port de protocole LACP comporte l'étape consistant à : mettre à jour les éléments des informations de saut suivant et la définition du port de protocole LACP correspondant au tunnel de fonctionnement avec des éléments des informations de saut suivant et une définition du port de protocole LACP correspondant à un tunnel de protection.

6. Système de commutation de tunnel pour des services de commutation multiprotocole par étiquette, MPLS, **caractérisé en ce que** le système comprend : une unité de définition initiale (31) et une unité de mise en oeuvre de commutation (32), dans lequel,
l'unité de définition initiale est configurée de manière à mettre en correspondance des informations de port de sortie de multiples services de commutation MPLS qui utilisent un même tunnel de fonctionnement avec un port de protocole de commande d'agrégation de liaisons, LACP, à définir des éléments d'informations de saut suivant auxquels les services de commutation MPLS correspondent en tant qu'éléments multiplexés, et à envoyer la définition du port de protocole LACP et les éléments des informations de saut suivant à l'unité de mise en oeuvre de commutation ; et
l'unité de mise en oeuvre de commutation est configurée de manière à, lorsqu'une commutation de tunnel est nécessaire, mettre à jour les éléments des informations de saut suivant et la définition du port de protocole LACP.

7. Système selon la revendication 6, dans lequel les éléments des informations de saut suivant comprennent : un élément d'index d'interface à trois couches et un élément d'index de commande d'accès au support, MAC, de destination.

8. Système selon la revendication 6 ou 7, dans lequel les multiples services de commutation MPLS qui utilisent un même tunnel de fonctionnement impliqué dans l'unité de définition initiale comprennent : tous les services de commutation MPLS qui utilisent le même tunnel de fonctionnement sur un noeud de tête de tunnel.

9. Système selon la revendication 6 ou 7, dans lequel la mise en correspondance, par l'unité de définition initiale, des informations de port de sortie des services de commutation MPLS avec le port de protocole LACP comprend : la définition d'un port membre du port de protocole LACP en tant qu'un port de sortie du tunnel de fonctionnement.

10. Système selon la revendication 6 ou 7, dans lequel la mise à jour, par l'unité de mise en oeuvre de commutation, des éléments des informations de saut suivant et de la définition du port de protocole LACP comprend : la mise à jour des éléments des informations de saut suivant et de la définition du port de protocole LACP correspondant au tunnel de fonctionnement avec des éléments des informations de saut suivant et une définition du port de protocole LACP correspondant à un tunnel de protection.
